# EUROPÄISCHE PATENTSCHRIFT

(11) **EP 4 001 731 B1**
(45) Veröffentlichungstag und Bekanntmachung des Hinweises auf die Patenterteilung: **07.08.2024**
(21) Anmeldenummer: 21193072.2
(22) Anmeldetag: 25.08.2021
(51) Int. Cl.: F16L 59/14, G01M 3/04

(54) **ROHRKONSTRUKTION AUFWEISEND EIN WÄRMEDÄMMMATERIAL ANGEORDNET IN EINEM ROHRZWISCHENRAUM**
PIPE CONSTRUCTION STRUCTURE COMPRISING A THERMAL INSULATION MATERIAL ARRANGED IN A PIPE INTERMEDIATE CAVITY
CONSTRUCTION TUBULAIRE COMPORTANT UNE MATIÈRE THERMOISOLANTE DISPOSÉE DANS UN ESPACE TUBULAIRE INTERMÉDIAIRE

(30) Priorität: 17.11.2020 DE 102020130282
(43) Veröffentlichungstag der Anmeldung: 25.05.2022
(73) Patentinhaber: BRUGG Rohrsystem AG, 5314 Kleindöttingen (CH)
(72) Erfinder: Dudat, Christian, 30827 Garbsen (DE); Frohne, Christian, Dr., 30657 Hannover (DE); Klee, Holger, 30179 Hannover (DE); Francke, Jens, 30853 Langenhagen (DE)
(74) Vertreter: Scheffler, Jörg

(56) Entgegenhaltungen:
- WO-A1-2014/208805
- WO-A1-2016/176708
- WO-A1-90/10208
- DE-A1- 2 151 231

## Beschreibung

Die Erfindung betrifft eine Rohrkonstruktion aufweisend ein Wärmedämmmaterial angeordnet in einem Rohrzwischenraum, wobei der Rohrzwischenraum durch ein Innenrohr und ein um das Innenrohr angeordnetes Außenrohr ausgebildet wird.

Bei doppelwandigen Rohrkonstruktionen sind Über- und Unterdrucklecküberwachungen bekannt, die eine Leckage durch eine Druckänderung im Rohrzwischenraum detektieren und anzeigen. Solche Überwachungen sind aufwendig in der Konstruktion und im Unterhalt. Des Weiteren sind sie ungeeignet, wenn der Rohrzwischenraum mit Wärmedämmmaterial versehen ist und dies einer Ausbreitung einer Druckänderung entgegenwirkt.

Meldeadern sind in verschiedenen Ausführungsformen bekannt. Sie werden beispielweise als blanke Metalldrähte ausgeführt, wobei Eindringen von Flüssigkeiten zu einer Verringerung des elektrischen Widerstands des Wärmedämmmaterials zwischen dem Metalldraht und einem Rohr führt. Ist das Rohr elektrisch leitend, ist eine Änderung der angelegten Spannung oder des Stromflusses detektierbar. Bei elektrisch nicht leitenden Rohren ist diese Ausführungsform nicht verwendbar. Als nachteilig hat sich die aufwendige Verlegung der Metalldrähte in dem Wärmedämmmaterial ohne Kontakt zum Rohr erwiesen.

Auch bei der Verwendung von elektrisch nicht leitenden Rohren, wie Kunststoffrohren, sind Meldeadern bekannt. Eine derartige Meldeader weist hierbei zum Beispiel drei elektrisch isolierte Meldeaderdrähte mit Aussparungen in ihrer elektrischen Isolation auf. Bei einer Leckage reduziert das Wasser den elektrischen Widerstand zwischen den unisolierten Bereichen der Meldeaderdrähte, sodass die Leckage detektiert und ihre Position ermittelt werden kann.

Die Meldeadern werden helixförmig um das Innenrohr verlegt, damit die Meldeader beim Verlegen der Rohrkonstruktion und im Gebrauch eine Möglichkeit zur Dehnung hat. Hierdurch ist es notwendig, die Meldeader deutlich länger auszuführen als die Rohrkonstruktion. Des Weiteren ist das helixförmige Verlegen der Meldeader um das Innenrohr aufwendig.

Alternativ können die einzelnen Meldeaderdrähte der Meldeader helixförmig um eine Seele gelegt sein, sodass die Meldeader eine Dehnbarkeit aufweist und parallel zur Rohrkonstruktion verlegt werden kann. Ein Flüssigkeitseintritt, also typischerweise ein Wassereintritt, wobei das Wasser in dem Innenrohr unter einem Überdruck von einigen Bar steht, an einer Stelle der Rohrkonstruktion, der die Meldeader erreicht, führt zu einer Längsausdehnung einer Leckage in der Rohrkonstruktion, sodass ein größerer Rohrabschnitt durch den Wassereintritt beschädigt wird. Wenn eine solche Meldeader oder ein anderes, längs in der Rohrkonstruktion eingebettetes Konstruktionselement nicht ausreichend im quellfähigen Material eingebettet ist, kann Flüssigkeit entlang eines solchen Längselements in die Rohrkonstruktion eindringen. Wird dies nicht unterbunden, so wird die Rohrkonstruktion auf einer größeren Länge auch außerhalb des ursprünglichen Schadens geschädigt und muss ggf. ausgetauscht werden.

Auch andere Undichtigkeiten entlang der Längsrichtung von Rohrkonstruktionen sind bekannt. Diese treten insbesondere an Grenzschichten, also an Übergängen von einem Werkstoff zum nächsten Werkstoff, auf. Ist beispielweise die Adhäsion zwischen dem Wärmedämmmaterial und einem Längselement unzureichend, so kann diese durch innere Spannungen bei der Installation oder bei Kraftentwicklung im Betrieb aufreißen. Insbesondere sind Längsundichtigkeiten zwischen einem Wärmedämmmaterial und einem Rohr bekannt. Hierbei ist die Haftung des Wärmedämmmaterials, insbesondere an einigen Kunststoffmaterialien, nur mit hohem Aufwand und an weiteren Kunststoffmaterialien nicht prozesssicher zu gewährleisten. Ein Wassereintritt an einer Stelle der Rohrkonstruktion führt zu einer Längsausdehnung der Leckage entlang von Längsfugen zwischen Konstruktionselementen und der Isolierung oder zwischen zwei Längselementen und zu einer Beschädigung eines größeren Rohrabschnitts in einer wärmegedämmten Rohrkonstruktion.

Die DE 21 51 231 A bezieht sich auf eine Transportleitung für ein Fluid mit einer Dichtungshülle und mit einer von der Leitung getrennten Sicherheitsleitung, die ein Hilfsfluid enthält und mit einer manometrischen Sicherheitsvorrichtung verbunden ist. Die Speisung der Leitung mit Fluid wird im Falle eines eine Druckänderung des Hilfsfluids herbeiführenden Bruchs dieser Sicherheitsleitung unterbrochen.

Die weiterhin zitierte WO 90 / 10 208 A1 betrifft ein Kabel zur Ortung von Flüssigkeiten, bei dem bei Zutritt von Flüssigkeit eine physikalische Änderung am Kabelaufbau an der Leckstelle eintritt, die gemessen und ausgewertet wird. Hierzu sind ein Kernelement vorgesehen, das empfindlich auf Zug oder Biegung reagiert, und eine Umhüllung aus einem in der zu ortenden Flüssigkeit quellenden Material. Bei Kontakt mit der Flüssigkeit dehnt sich die Umhüllung aus, wodurch ein radialer Druck ausgeübt wird. Zugleich tritt eine Verkürzung des Geflechts ein, die eine Stauchung des Kernelements, beispielsweise einer Lichtleitfaser, bewirkt. Diese Stauchung führt schließlich dazu, dass die Lichtleitfaser knickt und bricht.

Die WO 2016/176708 A1 betrifft eine Rohrkonstruktion gemäß dem Oberbegriff des Anspruchs 1.

Der Erfindung liegt die Aufgabe zugrunde, eine Möglichkeit zu schaffen, eine Längsausdehnung einer Leckage in einer wärmegedämmten Rohrkonstruktion zu verringern.

Diese Aufgabe wird erfindungsgemäß mit einer Rohrkonstruktion gemäß den Merkmalen des Anspruchs 1 gelöst.

Die weitere Ausgestaltung der Erfindung ist den Unteransprüchen zu entnehmen.

Erfindungsgemäß ist also eine Rohrkonstruktion vorgesehen, die ein Wärmedämmmaterial in einem Rohrzwischenraum aufweist, wobei der Rohrzwischenraum durch ein Innenrohr und ein um das Innenrohr angeordnetes Außenrohr ausgebildet wird. Der Rohrzwischenraum weist ein quellfähiges Material zum Erzeugen einer Längsdichtigkeit, insbesondere an Grenzschichten, im Rohrzwischenraum auf. Durch die zunehmende Dicke des Materials quer zu der Haupterstreckung infolge des Aufquellens in dem durch den Rohrzwischenraum gebildeten Kapillarspalt wird so die gewünschte Abdichtung erreicht. Erfindungsgemäß wird unter "Quellen" ein Vorgang bezeichnet, bei dem eine Flüssigkeit, ggf. auch Dampf, in das Material eindringt und eine Volumenvergrößerung des Materials bewirkt. Insbesondere wird also eine Volumen- und Abmessungsänderung bewirkt.

Längsundichtigkeiten in Rohrzwischenräumen sind insbesondere an Grenzschichten zwischen zwei Werkstoffen bekannt, wenn diese nicht vollflächig miteinander verbunden sind. Erfindungsgemäß wird im Herstellprozess der Rohrkonstruktion zwischen den Grenzschichten zumindest in Teilbereichen der Grenzschicht ein quellfähiges Material vorgesehen, das bei Kontakt mit Wasser aufquillt und aufgrund der damit einhergehenden Querschnittserweiterung des Materials vorhandene Zwischenräume auffüllt und somit eine Wasserausbreitung in Längsrichtung der Rohrkonstruktion verhindert, auch wenn das Wasser unter einem Überdruck von einigen Bar steht, wie es bei Rohrleitungen üblich ist.

Eine vorteilhafte Ausführungsform sieht eine Rohrkonstruktion vor, bei der der Rohrzwischenraum zu überwiegenden Teilen durch das Wärmedämmmaterial gefüllt ist, zumindest zu 80 %, bevorzugt zu 90 % und weiter bevorzugt zu mindesten 95 % des Volumens des Rohrzwischenraums. Das quellfähige Material ist an einer oder mehreren Grenzschichten zwischen dem Wärmedämmmaterial und dem Innenrohr und/oder dem Wärmedämmmaterial und dem Außenrohr und/oder an im Rohrzwischenraum befindlichen Konstruktionselement mit Längsausdehnung angebracht. Ein Konstruktionselement mit Längsausdehnung ist beispielweise eine Meldeader.

Das quellfähige Material erzeugt eine Längsdichtigkeit an zumindest einer Meldeader, die bevorzugt zur Detektion von Leckagen genutzt werden. Hierbei unterscheiden sich Meldeadern von üblichen Kabeln dadurch, dass sie keine gemeinsame Außenisolierung aufweisen, die die Gesamtheit von Einzelleitungen zur Umgebung isolieren, wobei die Außenisolierung das Verhindern einer Leckage vereinfacht, da Freiräume durch die Außenisolierung geschlossen werden. Im Gegensatz dazu weisen die Meldeadern gewollt Freiräume auf, um eine Dehnbarkeit zu ermöglichen, dies begünstigt beim Stand der Technik eine Leckageausbreitung entlang der Meldeadern und macht ein Abdichten anspruchsvoller. Meldeaderelemente bestehen aus Einzeldrähten. Diese können blank, isoliert, lose umwickelt oder mit perforierter Isolierung versehen ausgeführt sein. Diese Einzeldrähte können zur Erhöhung der Dehnbarkeit miteinander oder um eine Seele verseilt sein. Diese Verseilung führt zu potentiellen Kanälen zwischen den Drähten oder zwischen den Einzeldrähten und der Seele, durch die die eintretende Flüssigkeit einen Längskanal zur Ausbreitung findet.

Daher ist das quellfähige Material insbesondere vorteilhaft an einer Meldeader angeordnet, deren Meldeaderdrähte bevorzugt um eine Seele verseilt sind, die also beispielweise helixförmig verlaufende Meldeaderdrähte aufweist. Hierbei ist helixförmig nicht streng als geometrische Figur zu verstehen, sondern vielmehr als eine Geometrie, die als spiralförmig bezeichnet werden kann. Auch beim Vorliegen einer parallel zur Rohrkonstruktion verlaufenden Meldeader ist das quellfähige Material besonders vorteilhaft, da Längsundichtigkeiten an Meldeadern nur mit hohem Aufwand prozesssicher vermeidbar sind. Hierbei sind für helixförmig um eine Seele angeordnete Meldeaderdrähte die Anforderungen besonders groß, da diese für eine hohe Dehnbarkeit Freiräume aufweisen, entlang derer sich die Leckage ausbreiten kann, insbesondere wenn die Dehnbarkeit der Meldeadern hierdurch nicht eingeschränkt werden soll.

Eine vorteilhafte Ausführungsform sieht vor, dass das quellfähige Material in einem Trägermaterial zum Beispiel in Form eines Garns oder eines Vlieses oder eines Bands gebunden ist. Hierdurch wird ein einfaches, gezieltes und prozesssicheres Positionieren des quellfähigen Materials im Herstellprozess der Rohrkonstruktion ermöglicht.

Das quellfähige Material kann in einer Seele gebunden sein, um die die Meldeaderdrähte zum Erzeugen der Meldeader helixförmig angeordnet werden. Hierdurch wird eine weitere zusätzlich anzuordnende Komponente vermieden oder aber die Ausbreitung einer Leckage noch effektiver unterbunden.

Das quellfähige Material kann auch parallel zu einer Seele angeordnet sein und bevorzugt bandförmig vorliegen, wobei um die Seele und das quellfähige Material herum wiederum Meldeaderdrähte verseiltsind. Durch die Trennung der Funktion der Seele und dem Trägermaterial des quellfähigen Materials kann für die Seele und für das Trägermaterial jeweils unabhängig ein geeignetes Material gewählt werden.

Eine nicht erfindungsgemäße Ausführungsform sieht ein quellfähiges Material und Meldeaderdrähte vor, die jeweils, bevorzugt vereinzelt, um die Seele herum verseilt sind, wobei das quellfähige Material hierbei bevorzugt garnförmig vorliegt. Hierdurch werden in regelmäßigen Abständen in Längsrichtung der Meldeader Kreuzungspunkte zwischen den Meldeaderdrähten und dem quellfähigen Material erzeugt. Es wird also gewährleistet, dass jeder Meldeaderdraht in regelmäßigen Abständen im Kontakt zum quellfähigen Material steht und eine Leckageausbreitung entlang eines Meldeaderdrahts vermieden wird.

Als besonders vorteilhaft hat es sich herausgestellt, wenn das quellfähige Material an einem Teilumfang zumindest einer Meldeader anliegt, also auf eine bestehende Meldeader aufgelegt wird, bevorzugt in Form eines Bands oder Vlieses. Hierdurch wird in besonders einfacher Form und mit geringem Aufwand eine Leckage entlang einer Meldeader verhindert. Das quellfähige Material kann in Längsrichtung der Meldeader oder aber helixförmig entlang der einen Meldeader verlaufen, wobei eine Längsausrichtung des quellfähigen Materials eine besonders effiziente Herstellung ermöglicht, wohingegen eine helixförmige Anordnung eine Leckage besonders effizient unterbindet. Ein vollumfängliches Anliegen des quellfähigen Materials an der Meldeader erhöht hierbei die Effizienz der Leckage-Unterbindung weiter. Bei einem vollumfänglichen Anliegen des quellfähigen Materials an der Meldeader oder einem umfassen mehrerer Meldeadern ist das quellfähige Material derart zu wählen, dass zumindest zu Beginn der Leckage ein gewisser Wasseranteil die Meldeadern erreicht, damit die Meldeadern die Leckage melden können.

Bei einem vollumfänglichen Anliegen des quellfähigen Materials an der Meldeader hat es sich als vorteilhaft erwiesen, dass das quellfähige Material nur über Abschnitte in Längsrichtung der Meldeader, insbesondere in Form eines Vlieses oder Bands, an der Meldeader anliegt. Hierdurch wird eine Leckage auf einen kleinen Bereich begrenzt, wobei der Bedarf an quellfähigem Material und somit Herstellkosten reduziert werden. Eine weitere Reduzierung des Bedarfs an quellfähigem Material kann erreicht werden, wenn sowohl in Längsrichtung der Meldeader als auch in Umfangsrichtung nur ein Teilbereich der Meldeader mit quellfähigem Material versehen wird.

Es hat sich als vorteilhaft erwiesen, auch an weiteren Grenzschichten zwischen zwei Werkstoffen, die grundsätzlich eine Möglichkeit einer Längsleckage ermöglichen, ein quellfähiges Material vorzusehen. Durch das Vorsehen eines quellfähigen Materials zwischen zumindest Teilbereichen eines Rohrs und eines Wärmedämmmaterials der Rohrkonstruktion kann eine Leckage entlang einer Rohroberfläche verhindert oder zumindest vermindert werden, wobei sich im Fehlerfall die Leckage in Längsrichtung zwischen den Teilbereichen des Rohrs mit quellfähigem Material ausbreiten kann. Das Ausbreiten der Leckage ist aber auf eben solche Bereiche zwischen zwei Teilbereichen begrenzt und nicht über beliebige Längen entlang des Rohrs möglich.

Als besonders kosteneffizient hat es sich jedoch herausgestellt, wenn das quellfähige Material nur über Teilbereiche in Längsrichtung des Innenrohrs oder des Außenrohrs vollumfänglich anliegt, da hierbei ein geringerer Bedarf an quellfähigem Material besteht.

Die Erfindung lässt verschiedene Ausführungsformen zu. Zur weiteren Verdeutlichung ihres Grundprinzips sind verschiedene Ausführungsformen in den Zeichnungen dargestellt und werden nachfolgend beschrieben. Diese zeigen in
- Fig. 1: einen Querschnitt einer Rohrkonstruktion mit Wärmedämmmaterial und Meldeader;
- Fig. 2: einen Querschnitt einer Ausführungsform einer Meldeader mit quellfähigem Material;
- Fig. 3: einen Querschnitt einer nicht erfindungsgemäßen Ausführungsform einer Meldeader mit quellfähigem Material;

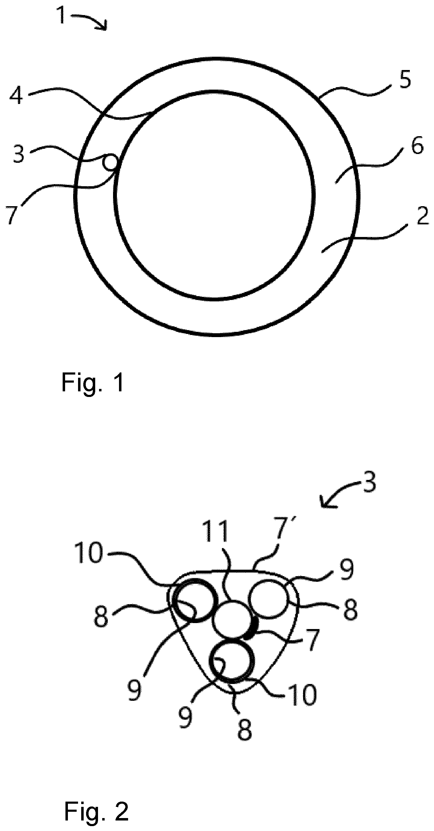

Figur 1 zeigt einen Querschnitt einer Rohrkonstruktion 1 mit Wärmedämmmaterial 2 und Meldeader 3, wobei ein Innenrohr 4 und ein Außenrohr 5 einen Rohrzwischenraum 6 ausbilden. Der Rohrzwischenraum 6 dient vorrangig der Wärmeisolierung und ist hierzu mit dem Wärmedämmmaterial 2 versehen.

Der Rohrzwischenraum 6, in dem sich Längsleckagen ausbreiten können, weist zur Detektion von Leckagen eine Meldeader 3 auf, entlang derer sich eine Längsleckage ausbilden kann. Um den durch die Leckage betroffenen Bereich klein zu halten, verläuft entlang der Meldeader 3 ein quellfähiges Material 7, das bei Kontakt mit einer Flüssigkeit, wie Wasser, dieses aufnimmt und aufquillt, wodurch die Leckage gestoppt wird.

Eine Detailansicht einer Ausführungsform einer Meldeader mit quellfähigem Material 7 ist in Figur 2 im Querschnitt dargestellt. Die Meldeaderdrähte 8 bestehend aus einem elektrisch leitenden Kern 9 und einer den elektrisch leitenden Kern 9 umgebenden elektrischen Isolierung 10, wobei die elektrische Isolierung 10 in Längsrichtung abschnittsweise Unterbrechungen aufweist, sodass die Meldeaderdrähte 8 im Bereich der Unterbrechungen unisoliert sind. Die Meldeaderdrähte 8 verlaufen, im Querschnitt nicht ersichtlich, helixförmig um die Seele 11 und das quellfähige Material 7, das bandförmig auf der Seele 11 aufliegt, herum. Das quellfähige Material 7, das parallel zu oder helixförmig um die Seele 11verläuft, umfasst im aufgequollenen Zustand 7' die drei Meldeaderdrähte 8, füllt potentielle Zwischenräume zwischen den Meldeaderdrähten 8 und zwischen den Meldeaderdrähten 8 und dem Wärmedämmmaterial aus und dichtet hierbei den Querschnitt ab.

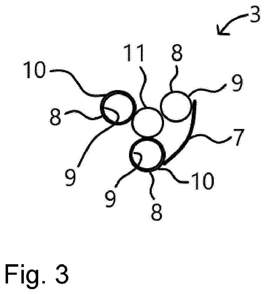

Figur 3 zeigt eine nicht erfindungsgemäße Ausführungsform einer Meldeader 3 mit quellfähigem Material 7, wobei die Meldeaderdrähte 8 helixförmig um die Seele 11 herum verlaufen. Das quellfähige Material 7 ist bandförmig von außen auf die Meldeader 3 aufgelegt.

### BEZUGSZEICHENLISTE

- 1: Rohrkonstruktion
- 2: Wärmedämmmaterial
- 3: Meldeader
- 4: Innenrohr
- 5: Außenrohr

- 6: Rohrzwischenraum
- 7: quellfähiges Material
- 7': quellfähiges Material (im aufgequollenen Zustand)
- 8: Meldeaderdrähte
- 9: elektrisch leitender Kern

- 10: elektrische Isolierung
- 11: Seele

## Patentansprüche

1. Rohrkonstruktion (1) aufweisend ein Wärmedämmmaterial (2) angeordnet in einem Rohrzwischenraum (6), wobei der Rohrzwischenraum (6) durch zumindest ein Innenrohr (4) und zumindest ein um das Innenrohr (4) angeordnetes Außenrohr (5) ausgebildet wird, wobei der Rohrzwischenraum (6) ein zumindest abschnittsweise quellfähiges Material (7) zum Erzeugen einer Längsdichtigkeit an zumindest einer Meldeader (3), insbesondere zur Abdichtung eines durch den Rohrzwischenraum (6) gebildeten Kapillarspalts durch Aufquellen des Materials (7) quer zu der Haupterstreckung, aufweist, **dadurch gekennzeichnet, dass** das quellfähige Material (7) in einer Seele (11) gebunden ist oder parallel zu und an einer Seele (11) verläuft, wobei um die Seele (11) und das quellfähige Material (7) herum Meldeaderdrähte (8) der Meldeader (3) helixförmig angeordnet sind.

2. Rohrkonstruktion (1) nach Anspruch 1, **dadurch gekennzeichnet, dass** der Rohrzwischenraum (6) zumindest zu 80 % des Volumens durch das Wärmedämmmaterial (2) gefüllt ist und das quellfähige Material (7) an einer oder mehreren Grenzschichten zwischen dem Wärmedämmmaterial (2) und dem Innenrohr (4) und/oder dem Wärmedämmmaterial (2) und dem Außenrohr (5) und/oder an im Rohrzwischenraum (6) befindlichen Konstruktionselement mit Längsausdehnung angebracht ist.

3. Rohrkonstruktion (1) nach Anspruch 1 oder 2, **dadurch gekennzeichnet, dass** das quellfähige Material (7) eine Längsdichtigkeit an Grenzschichten, insbesondere an oder in zumindest einer Meldeader (3), erzeugt, insbesondere in einer Meldeader (3) mit um eine Seele verseilten Meldeaderdrähten (8) und/oder an einer parallel zur Rohrkonstruktion (1) verlaufenden Meldeader (3).

4. Rohrkonstruktion (1) nach zumindest einem der vorhergehenden Ansprüche, **dadurch gekennzeichnet, dass** das quellfähige Material (7) in einem Trägermaterial, bevorzugt in Form eines Garns oder eines Vlieses oder eines Bands, gebunden ist.

5. Rohrkonstruktion (1) nach zumindest einem der vorhergehenden Ansprüche, **dadurch gekennzeichnet, dass** das quellfähige Material (7) zumindest an einem Teilumfang zumindest einer Meldeader (3) in Längsrichtung der zumindest einen Meldeader (3) oder aber helixförmig entlang der einen Meldeader (3), insbesondere in Form eines Vlieses oder Bands, anliegt.

6. Rohrkonstruktion (1) nach zumindest einem der vorhergehenden Ansprüche, **dadurch gekennzeichnet, dass** das quellfähige Material (7) vollumfänglich zumindest über Abschnitte an zumindest einer Meldeader (3), insbesondere in Form eines Vlieses oder Bands, anliegt.

7. Rohrkonstruktion (1) nach zumindest einem der vorhergehenden Ansprüche, **dadurch gekennzeichnet, dass** das quellfähige Material (7) zumindest über Teilbereiche in Längsrichtung des Innenrohrs (4) und/oder des Außenrohrs (5) vollumfänglich zum Erzeugen einer Längsdichtigkeit an dem Innenrohr (4) und/oder an dem Außenrohr (5) anliegt.

## Claims

1. Tubular construction (1) having a heat-insulation material (2) arranged in a inter-tube space (6), wherein the inter-tube space (6) is formed by at least one inner tube (4) and at least outer tube (5), which is arranged around the inner tube (4), wherein the inter-tube space (6) has an at least sectionally swellable material (7) for producing longitudinal tightness at at least one signalling conductor (3), in particular for sealing off a capillary gap, formed through the inter-tube space (6), by way of swelling of the material (7) transverse to the main extent, **characterized in that** the swellable material (7) is bonded in a core (11) or extends parallel to and on a core (11), wherein signalling-conductor wires (8) of the signalling conductor (3) are arranged helically around the core (11) and the swellable material (7).

2. Tubular construction (1) according to Claim 1, **characterized in that** at least 80% of the volume of the inter-tube space (6) is filled by the heat-insulation material (2), and the swellable material (7) is provided at one or more boundary layers between the heat-insulation material (2) and the inner tube (4) and/or the heat-insulation material (2) and the outer tube (5) and/or on a construction element with a longitudinal extent that is situated in the inter-tube space (6).

3. Tubular construction (1) according to Claim 1 or 2, **characterized in that** the swellable material (7) produces longitudinal tightness at boundary layers, in particular at or in at least one signalling conductor (3), in particular in a signalling conductor (3) with signalling-conductor wires (8) stranded around a core and/or at a signalling conductor (3) extending parallel to the tubular construction (1).

4. Tubular construction (1) according to at least one of the preceding claims, **characterized in that** the swellable material (7) is bonded in a carrier material, preferably in the form of a yarn or a nonwoven or a ribbon.

5. Tubular construction (1) according to at least one of the preceding claims, **characterized in that** the swellable material (7) bears, in particular in the form of a nonwoven or ribbon, at least against part of the periphery of at least one signalling conductor (3) in the longitudinal direction of the at least one signalling conductor (3) or else helically along one signalling conductor (3).

6. Tubular construction (1) according to at least one of the preceding claims, **characterized in that** the swellable material (7) bears, in particular in the form of a nonwoven or ribbon, fully peripherally against at least one signalling conductor (3) at least over sections.

7. Tubular construction (1) according to at least one of the preceding claims, **characterized in that** the swellable material (7) bears fully peripherally against the inner tube (4) and/or against the outer tube (5) at least over sub-regions in the longitudinal direction of the inner tube (4) and/or of the outer tube (5) for the purpose of producing longitudinal tightness.

## Revendications

1. Construction tubulaire (1) présentant un matériau d'isolation thermique (2) agencé dans un espace intermédiaire de tube (6), l'espace intermédiaire de tube (6) étant réalisé par au moins un tube intérieur (4) et au moins un tube extérieur (5) agencé autour du tube intérieur (4), l'espace intermédiaire de tube (6) présentant un matériau gonflable (7) au moins par sections pour produire une étanchéité longitudinale sur au moins un conducteur de signalisation (3), notamment pour l'étanchéification d'une fente capillaire formée par l'espace intermédiaire de tube (6) par gonflement du matériau (7) transversalement à l'extension principale, **caractérisée en ce que** le matériau gonflable (7) est lié dans une âme (11) ou s'étend parallèlement à et sur une âme (11), des fils de signalisation (8) du conducteur de signalisation (3) étant agencés en hélice autour de l'âme (11) et du matériau gonflable (7).

2. Construction tubulaire (1) selon la revendication 1, **caractérisée en ce que** l'espace intermédiaire de tube (6) est rempli au moins à 80 % du volume par le matériau d'isolation thermique (2) et le matériau gonflable (7) est disposé sur une ou plusieurs couches limites entre le matériau d'isolation thermique (2) et le tube intérieur (4) et/ou le matériau d'isolation thermique (2) et le tube extérieur (5) et/ou sur des éléments de construction se trouvant dans l'espace intermédiaire de tube (6) avec une dilatation longitudinale.

3. Construction tubulaire (1) selon la revendication 1 ou 2, **caractérisée en ce que** le matériau gonflable (7) produit une étanchéité longitudinale aux couches limites, notamment sur ou dans au moins un conducteur de signalisation (3), notamment dans un conducteur de signalisation (3) avec des fils de conducteur de signalisation (8) torsadés autour d'une âme et/ou sur un conducteur de signalisation (3) s'étendant parallèlement à la construction tubulaire (1).

4. Construction tubulaire (1) selon au moins l'une quelconque des revendications précédentes, **caractérisée en ce que** le matériau gonflable (7) est lié dans un matériau de support, de préférence sous la forme d'un fil ou d'un non-tissé ou d'une bande.

5. Construction tubulaire (1) selon au moins l'une quelconque des revendications précédentes, **caractérisée en ce que** le matériau gonflable (7) est appliqué au moins sur une circonférence partielle d'au moins un conducteur de signalisation (3) dans la direction longitudinale de l'au moins un conducteur de signalisation (3) ou en forme d'hélice le long du conducteur de signalisation (3), notamment sous la forme d'un non-tissé ou d'une bande.

6. Construction tubulaire (1) selon au moins l'une quelconque des revendications précédentes, **caractérisée en ce que** le matériau gonflable (7) s'applique entièrement, au moins sur des sections, à au moins un conducteur de signalisation (3), notamment sous la forme d'un non-tissé ou d'une bande.

7. Construction tubulaire (1) selon au moins l'une quelconque des revendications précédentes, **caractérisée en ce que** le matériau gonflable (7) s'applique entièrement sur le tube intérieur (4) et/ou le tube extérieur (5) au moins sur des zones partielles dans la direction longitudinale du tube intérieur (4) et/ou du tube extérieur (5) pour produire une étanchéité longitudinale.
